(19) Europäisches Patentamt
European Patent Office
Office européen des brevets

(11) **EP 4 546 025 A2**

(12) **EUROPEAN PATENT APPLICATION**

(43) Date of publication:
**30.04.2025 Bulletin 2025/18**

(21) Application number: **24196154.9**

(22) Date of filing: **23.08.2024**

(51) International Patent Classification (IPC):
**G02B 9/62** (2006.01)   **G02B 13/00** (2006.01)
**G02B 13/04** (2006.01)

(52) Cooperative Patent Classification (CPC):
**G02B 9/62; G02B 13/0045; G02B 13/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.10.2023 KR 20230141899**

(71) Applicant: **Samsung Electro-Mechanics Co., Ltd.
Suwon-si, Gyeonggi-do (KR)**

(72) Inventors:
• **Kim, Hyuk Joo**
  **Suwon-si, Gyeonggi-do (KR)**
• **Lee, Eun Chong**
  **Suwon-si, Gyeonggi-do (KR)**
• **Chae, Kyu Min**
  **Suwon-si, Gyeonggi-do (KR)**

(74) Representative: **Grünecker Patent- und
Rechtsanwälte
PartG mbB
Leopoldstraße 4
80802 München (DE)**

(54) **IMAGING LENS SYSTEM**

(57)  An imaging lens system includes a first lens, a second lens, a third lens, a fourth lens, a fifth lens, and a sixth lens, sequentially arranged from an object side. The imaging lens system satisfies the following conditional expressions: $-2.6 < f1/f6 < -2.0$, and $0.26 \leq f/f4 \leq 0.32$, where f is a focal length of the imaging lens system, f1 is a focal length of the first lens, f4 is a focal length of the fourth lens, and f6 is a focal length of the sixth lens.

FIG. 1

**EP 4 546 025 A2**

**Description**

CROSS-REFERENCE TO RELATED APPLICATIONS

This application claims benefit of priority to Korean Patent Application No. 10-2023-0141899 filed on October23, 2023, in the Korean Intellectual Property Office, the entire disclosure of which is incorporated herein by reference for all purposes.

BACKGROUND

1. Field

The following description relates to an imaging lens system. 2. Description of the Background

A small surveillance camera may be configured to capture image information within a surveillance zone. For example, the small surveillance camera may be mounted on a vehicle's front bumper, rear bumper, or the like and may provide a captured image to a driver.

Early small surveillance cameras were designed to capture an image of an obstacle adjacent to a vehicle and, thus, had not only relatively low resolution but also a high-resolution change based on temperature changes between -40 and 80°C. However, as the autonomous driving function of a vehicle is increasingly desired, there may be a demand for developing a surveillance camera with high resolution and constant optical characteristics even under harsh temperature conditions.

The above information is presented as background information only to assist with an understanding of the present disclosure. No determination has been made, and no assertion is made, as to whether any of the above might be applicable as prior art with regard to the disclosure.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an imaging lens system includes a first lens, a second lens, a third lens, a fourth lens, a fifth lens, and a sixth lens, sequentially arranged from an object side. The imaging lens system satisfies the following conditional expressions: $-2.6 < f1/f6 < -2.0$, and $0.26 \leq f/f4 \leq 0.32$, where f is a focal length of the imaging lens system, f1 is a focal length of the first lens, f4 is a focal length of the fourth lens, and f6 is a focal length of the sixth lens.

The first lens may have a convex object-side surface.

The second lens may have a concave object-side surface.

The third lens may have a convex object-side surface.

The fourth lens may have a convex object-side surface.

The fifth lens may have a concave object-side surface.

The sixth lens may have a convex object-side surface.

The imaging lens system may have a total of six lenses.

The first lens may be formed of a glass material.

The fourth lens may be formed of a glass material.

In another general aspect, an imaging lens system includes a first lens having a negative refractive power, a second lens having a negative refractive power, a third lens having a positive refractive power, a fourth lens having a positive refractive power, a fifth lens having a negative refractive power, and a sixth lens having a positive refractive power, sequentially arranged from an object side. The fourth lens has a convex object-side surface and a convex image-side surface. The imaging lens system has a total of six lenses, and satisfies the following conditional expression: $-2.6 < f1/f6 < -2.0$, where f1 is a focal length of the first lens and f6 is a focal length of the sixth lens.

In another general aspect, an imaging lens system includes a first lens, a second lens, a third lens, a fourth lens, a fifth lens, and a sixth lens, sequentially arranged from an object side. The imaging lens system satisfies the following conditional expressions: $1.2 < f1/f2 < 2.0$, $1.6 < f3/f4 < 2.0$, and f number $< 2.0$, where f1 is a focal length of the first lens, f2 is a focal length of the second lens, f3 is a focal length of the third lens, and f4 is a focal length of the fourth lens.

The first lens may have a convex object-side surface.

The second lens may have a concave object-side surface.

The third lens may have a convex object-side surface.

The fourth lens may have a convex object-side surface.

The fifth lens may have a concave object-side surface.

The sixth lens may have a convex object-side surface.

The imaging lens system may further include a stop disposed between the third lens and the fourth lens.

The fifth lens and the sixth lens may be arranged such that an image-side surface of the fifth lens and an object-side surface of the sixth lens are cemented together.

The imaging lens system may have a total of six lenses, and the first lens and the fourth lens may be formed of a glass material.

Other features and aspects will be apparent from the following detailed description, the drawings, and the claims.

BRIEF DESCRIPTION OF DRAWINGS

FIG. 1 is a configuration diagram of an imaging lens system according to a first embodiment of the present disclosure.
FIG. 2 is an aberration curve of the imaging lens system illustrated in FIG. 1.
FIG. 3 is a configuration diagram of an imaging lens system according to a second embodiment of the present disclosure.
FIG. 4 is an aberration curve of the imaging lens system illustrated in FIG. 3.
FIG. 5 is a configuration diagram of an imaging lens system according to a third embodiment of the present disclosure.
FIG. 6 is an aberration curve of the imaging lens system illustrated in FIG. 5.
FIG. 7 is a configuration diagram of an imaging lens system according to a fourth embodiment of the present disclosure.
FIG. 8 is an aberration curve of the imaging lens system illustrated in FIG. 7.
FIG. 9 is a configuration diagram of an imaging lens system according to a fifth embodiment of the present disclosure.
FIG. 10 is an aberration curve of the imaging lens system illustrated in FIG. 9.
FIG. 11 is a configuration diagram of an imaging lens system according to a sixth embodiment of the present disclosure.
FIG. 12 is an aberration curve of the imaging lens system illustrated in FIG. 11.
FIG. 13 is a configuration diagram of an imaging lens system according to a seventh embodiment of the present disclosure.
FIG. 14 is an aberration curve of the imaging lens system illustrated in FIG. 13.

Throughout the drawings and the detailed description, unless otherwise described, the same reference numerals refer to the same elements. The drawings may not be to scale, and the relative size, proportions, and depiction of elements in the drawings may be exaggerated for clarity, illustration, and convenience.

DETAILED DESCRIPTION

Hereinafter, while examples of the present disclosure will be described in detail with reference to the accompanying drawings, it is noted that examples are not limited to the same.

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of this disclosure. For example, the sequences of operations described herein are merely examples, and are not limited to those set forth herein, but may be changed as will be apparent after an understanding of this disclosure, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of this disclosure.

Throughout the specification, when an element, such as a layer, region, or substrate is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween.

As used herein, the term "and/or" includes any one and any combination of any two or more of the associated listed items; likewise, "at least one of" includes any one and any combination of any two or more of the associated listed items.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Spatially relative terms, such as "above," "upper," "below," "lower," and the like, may be used herein for ease of description to describe one element's relationship to another element as shown in the figures. Such spatially relative terms are intended to encompass different orientations of the device in use or operation in addition to the orientation depicted in the figures. For example, if the device in the figures is turned over, an element described as being "above," or "upper" relative to another element would then be "below," or "lower" relative to the other element. Thus, the term "above" encompasses both the above and below orientations depending on the spatial orientation of the device. The device may also be oriented in other ways (rotated 90 degrees or at other orientations), and the spatially relative terms used herein are to be interpreted accordingly.

The terminology used herein is for describing various examples only, and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Due to manufacturing techniques and/or tolerances, variations of the shapes shown in the drawings may occur. Thus, the examples described herein are not limited to the specific shapes shown in the drawings, but include changes in shape that occur during manufacturing.

Herein, it is noted that use of the term "may" with respect to an example, for example, as to what an example may include or implement, means that at least one example exists in which such a feature is included or implemented while all examples are not limited thereto.

The features of the examples described herein may be combined in various ways as will be apparent after an understanding of this disclosure. Further, although the examples described herein have a variety of configurations, other configurations are possible as will be apparent after an understanding of this disclosure.

In the present specification, a first lens refers to a lens most adjacent to an object (or a subject), and a sixth lens refers to a lens most adjacent to an imaging plane (or an image sensor). In the present specification, units of a radius of curvature, a thickness, a TTL (a distance from an object-side surface of the first lens to an imaging plane), an IMGHT (a height of an imaging plane), and a focal length are indicated in millimeters (mm).

A thickness of a lens, a gap between lenses, and a TTL refer to a distance of a lens along an optical axis. Also, in the descriptions of a shape of a lens, a configuration in which one surface is convex indicates that a paraxial region of the one surface is convex, and a configuration in which one surface is concave indicates that a paraxial region of the one surface is concave. Thus, even when it is described that one surface of a lens is convex, an edge portion of the lens may be concave. Similarly, even when it is described that one surface of a lens is concave, an edge portion of the lens may be convex.

According to the first aspect of the present disclosure, an imaging lens system may include a plurality of lenses. For example, according to the first aspect, an imaging lens system may include a first lens, a second lens, a third lens, a fourth lens, a fifth lens, and a sixth lens, sequentially arranged from an object side. According to the first aspect, the imaging lens system may satisfy a unique conditional expression. For example, according to the first aspect, the imaging lens system may satisfy the conditional expression $-2.6 < f1/f6 < -2.0$ and $0.26 \leq f/f4 \leq 0.32$. In the conditional expressions, f is a focal length of the imaging lens system, f1 is a focal length of the first lens, f4 is a focal length of the fourth lens, and f6 is a focal length of the sixth lens.

According to a second aspect of the present disclosure, an imaging lens system may include a plurality of lenses. For example, according to the second aspect, an imaging lens system may include a first lens, a second lens, a third lens, a fourth lens, a fifth lens, and a sixth lens, sequentially arranged from an object side. According to the second aspect, the imaging lens system may satisfy a unique conditional expression. For example, the imaging lens system, according to the second aspect, may satisfy conditional expressions $1.2 < f1/f2 < 2.0$, and $1.6 < f3/f4 < 2.1$, and f number $< 2.1$. In the above conditional expressions, f2 is a focal length of the second lens, and f3 is a focal length of the third lens.

An imaging lens system, according to a third aspect, may include first to sixth lenses, sequentially arranged from an object side, and may satisfy one or more of the following conditional expressions:

$$0.260 \leq f/f4 \leq 0.320$$

$$1.20 < f1/f2 < 2.0$$

$$-1.20 < f1/f3 < -0.60$$

$$-1.80 < f1/f4 < -1.40$$

$$2.0 < f1/f5 < 2.8$$

$$-2.60 < f1/f6 < -2.0$$

$$-1.20 < f2/f4 < -0.80$$

$$1.60 < f3/f4 < 2.0$$

$$-2.0 < f5/f6 < -0.40$$

$$-1.0 < (f1+f2+f3)/(f4+f5+f6) < -0.60$$

In the above conditional expressions, f5 is a focal length of the fifth lens.

An imaging lens system, according to a fourth aspect, may include first to sixth lenses, sequentially arranged from an object side, and may satisfy one or more of the following conditional expressions:

$$4.0 < R1/R2 < 5.0$$

$$1.0 < (R1+R3)/(R2+R4) < 2.0$$

$$-1.20 < (R7+R10)/(R8+R9) < -0.60$$

$$0.60 < R10/R11 < 1.20$$

$$-1.20 < R10/R12 < -0.80$$

$$-2.40 < (R10+R11)/R12 < -1.80$$

$$1.20 < (R10-R12)/R11 < 2.40$$

$$5.0 < (R1+R12)/R11 < 6.0$$

In the above conditional expressions, R1 is a radius of curvature of an object-side surface of the first lens, R2 is a radius of curvature of an image-side surface of the first lens, R3 is a radius of curvature of an object-side surface of the second lens, R4 is a radius of curvature of an image-side surface of the second lens, R7 is a radius of curvature of an object-side surface of the fourth lens, R8 is a radius of curvature of an image-side surface of the fourth lens, R9 is a radius of curvature of an object-side surface of the fifth lens, R10 is a radius of curvature of an image-side surface of the fifth lens, R11 is a radius of curvature of an object-side surface of the sixth lens, and R12 is a radius of curvature of an image-side surface of the sixth lens.

According to a fifth aspect, an imaging lens system may include two or more characteristics of the first to fourth aspects. For example, according to the fifth aspect, an imaging lens system may be configured to satisfy one or more conditional expressions according to the fourth aspect while including the characteristics of the first aspect. As another example, according to the fifth aspect, an imaging lens system may be configured to satisfy one or more of the conditional expressions according to the fourth aspect while satisfying one or more of the conditional expressions of the third aspect.

According to the first to fifth aspects, the imaging lens systems may include one or more lenses with the following characteristics as desired. For example, according to the first aspect, the imaging lens system may include one of the first to sixth lenses according to the following characteristics. As another example, according to the second aspect, the imaging lens system may include two or more of the first to sixth lenses according to the following characteristics. According to the above-described aspects, the imaging lens systems do not necessarily include a lens according to the following characteristics. Below, the characteristics of the first to sixth lenses will be described.

The first lens may have refractive power. For example, the first lens may have negative refractive power. The first lens may have a convex shape on one surface. For example, the first lens may have a convex object-side surface. The first lens may include a spherical surface or an aspherical surface. For example, both surfaces of the first lens may be spherical. The first lens may be made of material that has high light transmittance and excellent processability. For example, the first lens may be formed of glass. The first lens may be configured to have characteristics that are advantageous for improving aberration. For example, the first lens may have a refractive index of 1.75 or more and an Abbe number of 45 or more.

The second lens may have refractive power. For example, the second lens may have negative refractive power. The second lens may have a concave shape on one surface. For example, the second lens may have a concave object-side surface. The second lens may include an aspherical surface. For example, both surfaces of the second lens may be aspherical. The second lens may include an inflection point. For example, the inflection point may be formed on the object-side surface of the second lens. The second lens may be made of material that has high light transmittance and excellent processability. For example, the second lens may be made of plastic. The second lens may have a predetermined refractive index. For example, the refractive index of the second lens may be 1.6 or less. The second lens may have a predetermined Abbe number. For example, an Abbe number of the second lens may be 54 or more.

The third lens may have refractive power. For example, the third lens may have positive refractive power. The third lens may have a convex shape on one surface. For example, the third lens may have a convex object-side surface. The third lens may include an aspherical surface. For example, both surfaces of the third lens may be aspherical. The third lens may be made of a material with high light transmittance and excellent processability. For example, the third lens may be made of plastic. The third lens may have a predetermined refractive index. For example, the refractive index of the third lens may be 1.6 or more. The third lens may have a predetermined Abbe number. For example, an Abbe number of the third lens may be greater than 20 and less than 30.

The fourth lens may have refractive power. For example, the fourth lens may have positive refractive power. The fourth lens may have a convex shape on one surface. For example, the fourth lens may have a convex object-side surface. The fourth lens may include a spherical surface. For example, both surfaces of the fourth lens may be spherical. The fourth lens may be made of material with high light transmittance and excellent processability. For example, the fourth lens may be formed of glass. The fourth lens may be configured to have characteristics that are advantageous for improving aberration. For example, the fourth lens may have a refractive index of 1.70 or more and an Abbe number of 50 or more.

The fifth lens may have refractive power. For example, the fifth lens may have negative refractive power. The fifth lens may have a concave shape on one surface. For example, the fifth lens may have a concave object-side surface. The fifth lens may include an aspherical surface. For example, at least one of the object-side surface or an image-side surface of the fifth lens may be aspherical. The fifth lens may be formed of a material having high light transmittance and excellent processability. For example, the fifth lens may be made of plastic. The fifth lens may have a predetermined refractive index. For example, the refractive index of the fifth lens may be 1.6 or more. The fifth lens may have a predetermined Abbe number. For example, an Abbe number of the fifth lens may be greater than 20 and less than 30. The fifth lens may be configured to be cemented to the sixth lens. For example, an image-side surface of the fifth lens may be cemented to an object-side surface of the sixth lens. The fifth lens and the sixth lens are not necessarily configured to be cemented together.

The sixth lens may have refractive power. For example, the sixth lens may have positive refractive power. The sixth lens may have a convex shape on one surface. For example, the sixth lens may have a convex object-side surface. The sixth lens may include an aspherical surface. For example, at least one of the object-side surface or an image-side surface of the sixth lens may be aspherical. The sixth lens may be made of a material with high light transmittance and excellent processability. For example, the sixth lens may be made of plastic. The sixth lens may have a predetermined refractive index. For example, the refractive index of the sixth lens may be greater than 1.5 and less than 1.6. The sixth lens may have a predetermined Abbe number. For example, an Abbe number of the sixth lens may be 50 or more.

An aspherical lens constituting an imaging lens system may be expressed by the following Equation 1:

$$Z = \frac{cr^2}{1+\sqrt{1-(1+k)c^2r^2}} + Ar^4 + Br^6 + Cr^8 + Dr^{10} + Er^{12} + Fr^{14} + Fr^{14} + Gr^{16} + \dots$$

In Equation 1, c is the reciprocal of a radius of curvature of a corresponding lens, k is a conic constant, r is a distance from any point on an aspherical surface to an optical axis, A, B, C, D, E, F, F, and G are aspherical surface constants, and Z (or SAG) is a height in an optical axis direction from a certain point on the aspherical surface to a vertex of the corresponding aspherical surface.

An imaging lens system may include lenses formed of different materials. For example, the first and fourth lenses may be formed of a different material from the second lens, the third lens, the fifth lens, and the sixth lens. As a specific example, the first lens and the fourth lens may be formed of a glass material that has a low coefficient of thermal expansion due to external impacts and changes in temperature, and the second lens, the third lens, the fifth lens, and the sixth lens may be formed of a plastic material that is easy to process. However, the materials of the first to sixth lenses are not limited to the examples described above. For example, the first lens may be formed of a glass material and the second to may be the sixth lenses may be formed of plastic material.

The imaging lens system may include a stop, an imaging plane, and a filter.

The stop may be disposed between the lenses. For example, the stop may be disposed between the third lens and the fourth lens. As another example, the stop may be disposed on an image side of a lens having positive refractive power, or between a lens having positive refractive power and a lens having positive refractive power. The imaging plane may be formed at a point at which light refracted by the first to sixth lenses forms an image. The imaging plane may be formed by an image sensor. For example, the imaging plane may be formed on a surface of the image sensor or on an internal side of the image sensor. The filter may be disposed between the sixth lens and the imaging plane. The filter may block certain wavelengths of light. For example, the filter may block light in infrared wavelengths.

Hereinafter, embodiments of the present disclosure will be described in detail based on the attached illustrative drawings.

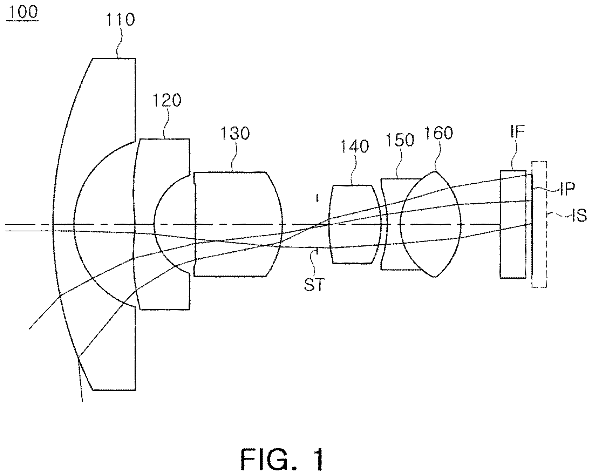

First, an imaging lens system according to a first embodiment will be described with reference to FIG. 1.

An imaging lens system 100 may include a first lens 110, a second lens 120, a third lens 130, a fourth lens 140, a fifth lens 150, and a sixth lens 160.

The first lens 110 may have negative refractive power, a convex object-side surface, and a concave image-side surface. The second lens 120 may have negative refractive power, a concave object-side surface, and a concave image-side surface. The third lens 130 may have positive refractive power, a convex object-side surface, and a convex image-side surface. The fourth lens 140 may have positive refractive power and a convex object-side surface and a convex image-side surface. The fifth lens 150 may have negative refractive power, may have a concave object-side surface, and a concave image-side surface. The sixth lens 160 may have positive refractive power, a convex object-side surface, and a convex image-side surface.

The imaging lens system 100 may further include a stop ST, a filter IF, and an imaging plane IP. The stop ST may be disposed between the third lens 130 and the fourth lens 140. The imaging plane IP may be formed on an image sensor IS, and the filter IF may be disposed between the sixth lens 160 and the imaging plane IP.

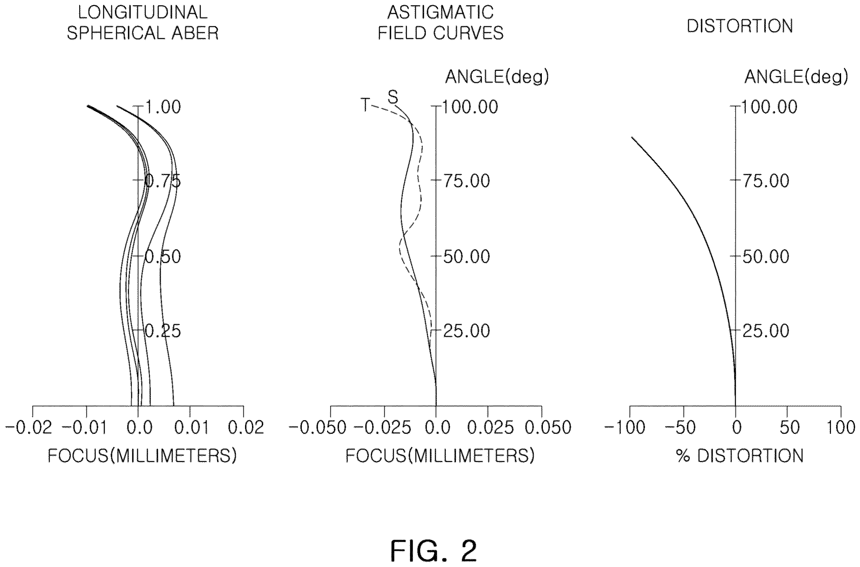

FIG. 2 illustrates an aberration curve of an imaging lens system according to the present embodiment. Tables 1 and 2 illustrate lens characteristics and aspherical values of an imaging lens system according to the present embodiment.

Table 1

| Surface No. | Component | Curvature Radius | Thickness/D istance | Refractiv e Index | Abbe No. |
|---|---|---|---|---|---|
| S1 | 1st Lens | 13.7400 | 0.7000 | 1.773 | 49.6 |
| S2 | | 3.1300 | 1.9900 | | |
| S3 | 2nd Lens | -4.9400 | 0.6090 | 1.537 | 56 |
| S4 | | 2.4700 | 1.3390 | | |
| S5 | 3rd Lens | 118.1200 | 2.8500 | 1.614 | 26 |
| S6 | | -3.6400 | 1.1320 | | |
| S7 | Stop | infinity | 0.3470 | | |
| S8 | 4th Lens | 5.8600 | 1.7240 | 1.729 | 53.9 |
| S9 | | -3.6500 | 0.2000 | | |
| S10 | 5th Lens | -5.9300 | 0.4500 | 1.656 | 21.2 |
| S11 | | 2.1500 | 0.0000 | | |
| S12 | 6th Lens | 2.1500 | 1.9570 | 1.537 | 56 |
| S13 | | -2.0700 | 1.3000 | | |

Table 2

| Surface No. | S3 | S4 | S5 | S6 | S10 | S13 |
|---|---|---|---|---|---|---|
| K | 1.608E+00 | 2.549E-01 | - 9.900E+0 1 | -8.773E-02 | - 2.296E+01 | -1.911E-01 |
| A | 7.748E-02 | 6.903E-02 | -7.586E-04 | -2.373E-05 | -3.273E-02 | 2.367E-02 |
| B | -2.999E-02 | 1.991E-02 | 6.577E-04 | 4.954E-03 | -1.062E-02 | -1.764E-02 |
| C | 8.776E-03 | -4.455E-02 | -5.112E-04 | -6.985E-03 | 3.114E-02 | 1.842E-02 |
| D | -1.657E-03 | 2.860E-02 | 8.142E-04 | 4.026E-03 | -3.401E-02 | -1.000E-02 |
| E | 1.920E-04 | -6.958E-03 | -4.389E-04 | -1.216E-03 | 2.173E-02 | 3.151E-03 |
| F | -1.251E-05 | 2.698E-04 | 6.425E-05 | 1.855E-04 | -7.522E-03 | -5.057E-04 |
| G | 3.563E-07 | 6.715E-05 | -2.844E-06 | -1.093E-05 | 1.070E-03 | 3.079E-05 |

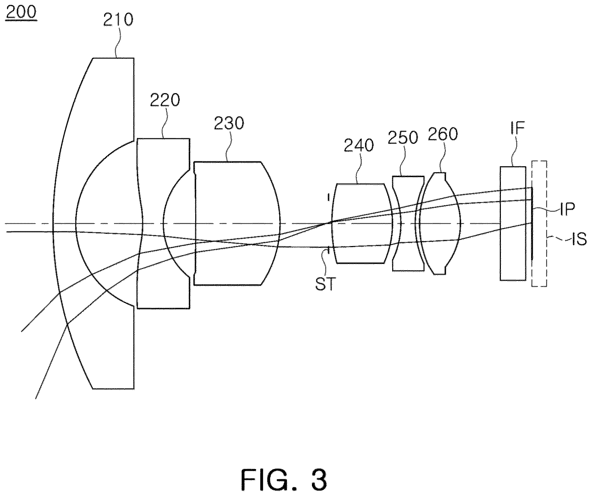

An imaging lens system according to a second embodiment will be described with reference to FIG. 3.

An imaging lens system 200 may include a first lens 210, a second lens 220, a third lens 230, a fourth lens 240, a fifth lens 250, and a sixth lens 260.

The first lens 210 may have negative refractive power, a convex object-side surface, and a concave image-side surface. The second lens 220 may have negative refractive power, a concave object-side surface, and a concave image-side surface. The third lens 230 may have positive refractive power, a concave object-side surface, and a convex image-side surface. The fourth lens 240 may have positive refractive power, a convex object-side surface, and a convex image-side surface. The fifth lens 250 may have negative refractive power, a concave object-side surface, and a concave image-side surface. The sixth lens 260 may have positive refractive power, a convex object-side surface, and a convex image-side surface.

The imaging lens system 200 may further include a stop ST, a filter IF, and an imaging plane IP. The stop ST may be disposed between the third lens 230 and the fourth lens 240. The imaging plane IP may be formed on an image sensor IS, and the filter IF may be disposed between the sixth lens 260 and the imaging plane IP.

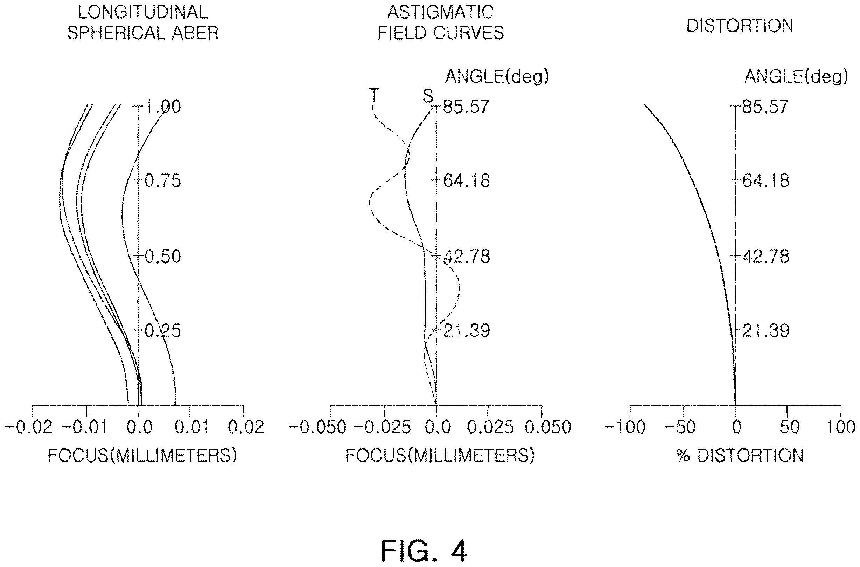

FIG. 4 illustrates an aberration curve of an imaging lens system according to the present embodiment. Tables 3 and 4 illustrate lens characteristics and aspherical values of an imaging lens system according to the present embodiment.

Table 3

| Surface No. | Component | Curvature Radius | Thickness/ Distance | Refractive Index | Abbe No. |
|---|---|---|---|---|---|
| S1 | 1st Lens | 13.3570 | 0.7770 | 1.7725 | 49.6 |
| S2 | | 3.0790 | 1.9550 | | |
| S3 | 2nd Lens | -5.1380 | 0.5320 | 1.5365 | 55.9 |
| S4 | | 2.9500 | 1.3580 | | |
| S5 | 3rd Lens | -22.2830 | 2.8500 | 1.6142 | 26.1 |
| S6 | | -3.1960 | 1.2870 | | |
| S7 | Stop | infinity | 0.0490 | | |
| S8 | 4th Lens | 7.0820 | 1.8560 | 1.7292 | 53.9 |
| S9 | | -3.0540 | 0.2000 | | |
| S10 | 5th Lens | -9.5320 | 0.4500 | 1.6561 | 21.2 |
| S11 | | 1.5790 | 0.1000 | | |
| S12 | 6th Lens | 2.2410 | 1.7870 | 1.5168 | 56 |
| S13 | | -1.7270 | 1.3000 | | |

Table 4

| Surface No. | S3 | S4 | S5 | S6 | S10 | S11 | S12 | S13 |
|---|---|---|---|---|---|---|---|---|
| K | - 5.89E+01 | 1.30E+00 | 7.26E+01 | -2.29E-01 | - 8.74E+00 | - 5.29E+00 | 4.50E-01 | -1.23E-01 |

(continued)

| Surface No. | S3 | S4 | S5 | S6 | S10 | S11 | S12 | S13 |
|---|---|---|---|---|---|---|---|---|
| A | 3.31E-02 | 7.38E-02 | -6.82E-03 | 1.51E-04 | -1.25E-01 | -1.95E-02 | -7.29E-02 | 2.96E-02 |
| B | -9.84E-03 | -2.22E-02 | 6.58E-04 | 9.47E-04 | 6.99E-02 | -8.48E-03 | -4.93E-03 | -1.00E-02 |
| C | 1.88E-03 | 4.64E-03 | -1.11E-03 | -1.46E-03 | -5.52E-02 | 1.55E-02 | 1.49E-02 | 1.07E-02 |
| D | -2.23E-04 | -7.53E-04 | 1.54E-04 | 8.64E-04 | 3.54E-02 | -4.28E-03 | -4.11E-03 | -4.05E-03 |
| E | 1.54E-05 | 6.51E-05 | 2.91E-05 | -2.17E-04 | -9.53E-03 | | 5.45E-05 | 8.60E-04 |
| F | -4.87E-07 | -1.18E-11 | | 2.00E-05 | | | | |

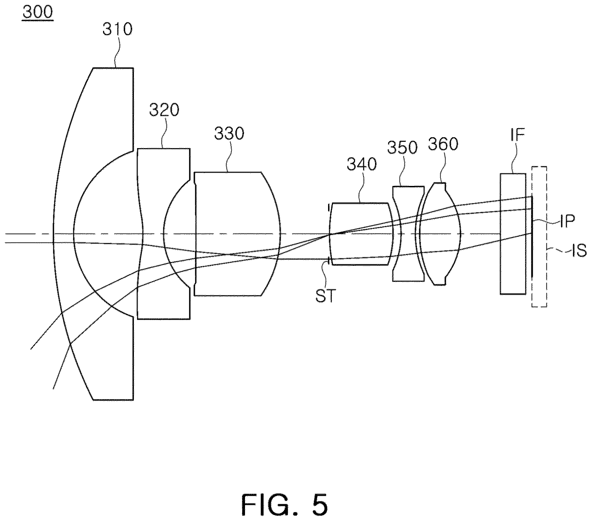

An imaging lens system according to a third embodiment will be described with reference to FIG. 5.

An imaging lens system 300 may include a first lens 310, a second lens 320, a third lens 330, a fourth lens 340, a fifth lens 350, and a sixth lens 360.

The first lens 310 may have negative refractive power, a convex object-side surface, and a concave image-side surface. The second lens 320 may have negative refractive power, a concave object-side surface, and a concave image-side surface. The third lens 330 may have positive refractive power, a convex object-side surface, and a convex image-side surface. The fourth lens 340 may have positive refractive power, a convex object-side surface, and a convex image-side surface. The fifth lens 350 may have negative refractive power, a concave object-side surface, and a concave image-side surface. The sixth lens 360 may have positive refractive power, a convex object-side surface, and a convex image-side surface.

The imaging lens system 300 may further include a stop ST, a filter IF, and an imaging plane IP. The stop ST may be disposed between the third lens 330 and the fourth lens 340. The imaging plane IP may be formed on an image sensor IS, and the filter IF may be disposed between the sixth lens 360 and the imaging plane IP.

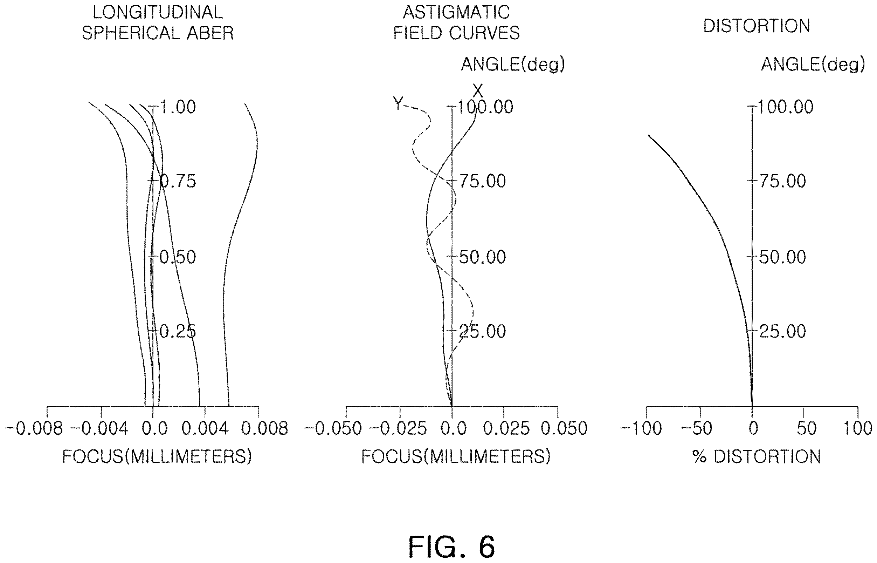

FIG. 6 illustrates an aberration curve of an imaging lens system according to the present embodiment. Tables 5 and 6 illustrate lens characteristics and aspherical values of an imaging lens system according to the present embodiment.

Table 5

| Surface No. | Component | Curvature Radius | Thickness/ Distance | Refractive Index | Abbe No. |
|---|---|---|---|---|---|
| S1 | 1st Lens | 13.5740 | 0.7000 | 1.7725 | 49.6 |
| S2 | | 2.9580 | 2.2150 | | |
| S3 | 2nd Lens | -2.4130 | 0.6710 | 1.5365 | 56 |
| S4 | | 7.0090 | 1.0510 | | |
| S5 | 3rd Lens | 43.6560 | 2.7660 | 1.6142 | 26 |
| S6 | | -3.7780 | 1.6000 | | |
| S7 | Stop | infinity | 0.0430 | | |
| S8 | 4th Lens | 6.0320 | 2.0600 | 1.7292 | 53.9 |
| S9 | | -3.0840 | 0.2000 | | |
| S10 | 5th Lens | -7.5110 | 0.5500 | 1.6561 | 21.2 |
| S11 | | 1.7850 | 0.1000 | | |
| S12 | 6th Lens | 2.1630 | 1.3440 | 1.5168 | 56 |
| S13 | | -2.0240 | 1.3010 | | |

Table 6

| Surface No. | S3 | S4 | S5 | S6 | S10 | S11 | S12 | S13 |
|---|---|---|---|---|---|---|---|---|
| K | - 1.42E+01 | 1.16E+01 | 9.90E+01 | 1.89E+00 | 7.51E+00 | 1.79E+00 | 2.16E+00 | 4.65E-01 |
| A | 3.98E-02 | 1.27E-01 | -4.26E-03 | 3.17E-03 | - 2.78E+01 | - 2.02E+00 | 2.14E-01 | 1.67E-02 |
| B | -1.25E-02 | -4.08E-02 | 1.98E-03 | 2.59E-03 | -7.54E-02 | -9.12E-02 | -1.01E-01 | -3.04E-03 |

(continued)

| Surface No. | S3 | S4 | S5 | S6 | S10 | S11 | S12 | S13 |
|---|---|---|---|---|---|---|---|---|
| C | 2.18E-03 | 3.88E-03 | -2.89E-03 | -8.73E-04 | -3.11E-03 | 3.43E-02 | 2.58E-02 | 9.25E-03 |
| D | -1.94E-04 | 1.45E-03 | 1.27E-03 | 2.75E-04 | 9.41E-03 | -1.15E-02 | -5.38E-03 | -2.36E-03 |
| E | 5.64E-06 | -3.65E-04 | -1.79E-04 | -1.19E-05 | -4.37E-03 | 1.45E-03 | | 1.07E-03 |
| F | 9.69E-08 | | | -3.06E-06 | 9.33E-04 | | | |

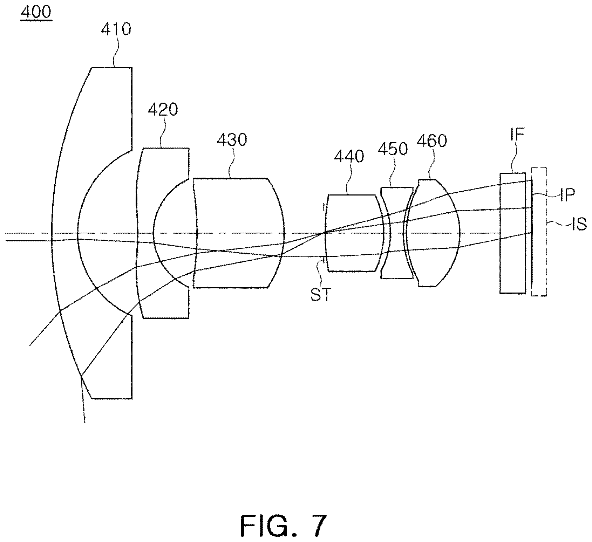

An imaging lens system according to a fourth embodiment will be described with reference to FIG. 7.

An imaging lens system 400 may include a first lens 410, a second lens 420, a third lens 430, a fourth lens 440, a fifth lens 450, and a sixth lens 460.

The first lens 410 may have negative refractive power, a convex object-side surface, and a concave image-side surface. The second lens 420 may have negative refractive power, a concave object-side surface, and a concave image-side surface. The third lens 430 may have positive refractive power, a concave object-side surface, and a convex image-side surface. The fourth lens 440 may have positive refractive power, a convex object-side surface, and a convex image-side surface. The fifth lens 450 may have negative refractive power, a concave object-side surface, and a concave image-side surface. The sixth lens 460 may have positive refractive power, a convex object-side surface, and a convex image-side surface.

The imaging lens system 400 may further include a stop ST, a filter IF, and an imaging plane IP. The stop ST may be disposed between the third lens 430 and the fourth lens 440. The imaging plane IP may be formed on an image sensor IS, and the filter IF may be disposed between the sixth lens 460 and the imaging plane IP.

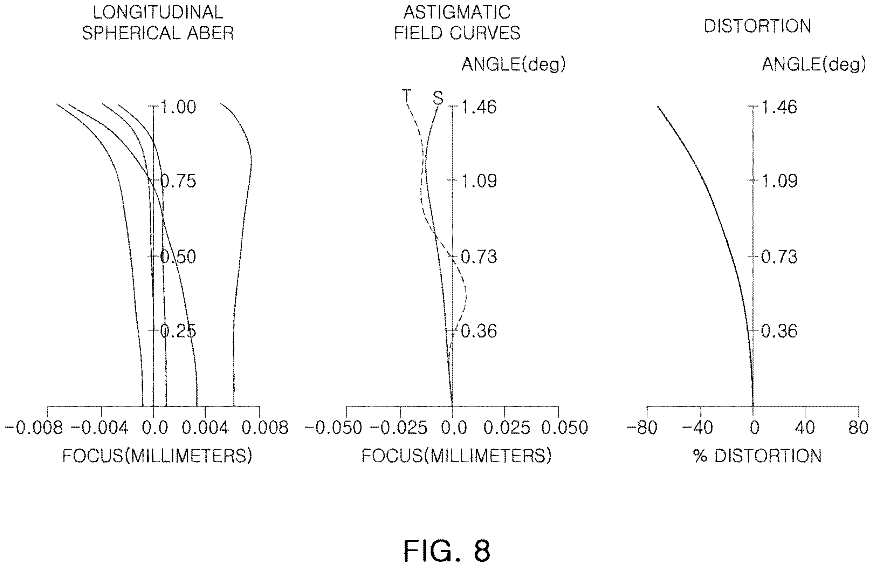

FIG. 8 illustrates an aberration curve of an imaging lens system according to the present embodiment. Tables 7 and 8 illustrate lens characteristics and aspherical values of an imaging lens system according to the present embodiment.

Table 7

| Surface No. | Component | Curvature Radius | Thickness/ Distance | Refractive Index | Abbe No. |
|---|---|---|---|---|---|
| S1 | 1st Lens | 13.2900 | 0.7950 | 1.773 | 49.6 |
| S2 | | 3.0600 | 1.9290 | | |
| S3 | 2nd Lens | -4.9700 | 0.5250 | 1.537 | 56 |
| S4 | | 2.9300 | 1.3710 | | |
| S5 | 3rd Lens | -24.1700 | 2.8500 | 1.614 | 26 |
| S6 | | -3.1800 | 1.2660 | | |
| S7 | Stop | infinity | 0.0430 | | |
| S8 | 4th Lens | 6.4100 | 1.8890 | 1.729 | 53.9 |
| S9 | | -3.0700 | 0.2000 | | |
| S10 | 5th Lens | -5.4000 | 0.4500 | 1.656 | 21.2 |
| S11 | | 1.7600 | 0.1000 | | |
| S12 | 6th Lens | 2.2500 | 1.7160 | 1.537 | 56 |
| S13 | | -1.7200 | 1.3000 | | |

Table 8

| Surface No. | S3 | S4 | S5 | S6 | S10 | S11 | S12 | S13 |
|---|---|---|---|---|---|---|---|---|
| K | - 5.88E+01 | 1.30E+00 | 8.74E+01 | -2.19E-01 | - 8.75E+00 | - 5.29E+00 | 4.49E-01 | -1.18E-01 |
| A | 3.50E-02 | 8.12E-02 | -6.63E-03 | -7.58E-04 | -1.10E-01 | -3.22E-02 | -7.84E-02 | 3.03E-02 |
| B | -9.99E-03 | -2.28E-02 | 1.06E-03 | 1.03E-03 | 5.36E-02 | -5.39E-03 | -6.11E-03 | -9.82E-03 |
| C | 1.87E-03 | 5.39E-03 | -1.39E-03 | -1.55E-03 | -4.50E-02 | 1.63E-02 | 1.56E-02 | 1.08E-02 |
| D | -2.24E-04 | -8.20E-04 | 4.47E-05 | 8.67E-04 | 3.38E-02 | -4.66E-03 | -3.99E-03 | -3.98E-03 |

(continued)

| Surface No. | S3 | S4 | S5 | S6 | S10 | S11 | S12 | S13 |
|---|---|---|---|---|---|---|---|---|
| E | 1.55E-05 | -3.44E-05 | 4.39E-05 | -2.07E-04 | -9.94E-03 | | | 8.56E-04 |
| F | -4.80E-07 | -1.18E-11 | | 1.87E-05 | | | | |

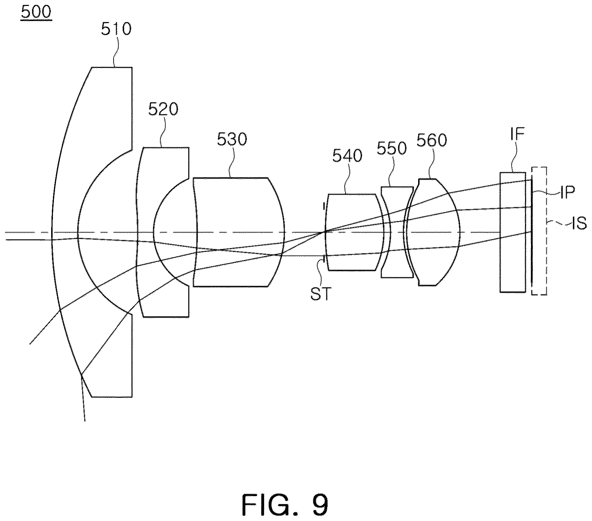

An imaging lens system according to a fifth embodiment will be described with reference to FIG. 9.

An imaging lens system 500 may include a first lens 510, a second lens 520, a third lens 530, a fourth lens 540, a fifth lens 550, and a sixth lens 560.

The first lens 510 may have negative refractive power, a convex object-side surface, and a concave image-side surface. The second lens 520 may have negative refractive power, a concave object-side surface, and a concave image-side surface. The third lens 530 may have positive refractive power, a convex object-side surface, and a convex image-side surface. The fourth lens 540 may have positive refractive power, a convex object-side surface, and a convex image-side surface. The fifth lens 550 may have negative refractive power, a concave object-side surface, and a concave image-side surface. The sixth lens 560 may have positive refractive power, a convex object-side surface, and a convex image-side surface.

The imaging lens system 500 may further include a stop ST, a filter IF, and an imaging plane IP. The stop ST may be disposed between the third lens 530 and the fourth lens 540. The imaging plane IP may be formed on an image sensor IS, and the filter IF may be disposed between the sixth lens 560 and the imaging plane IP.

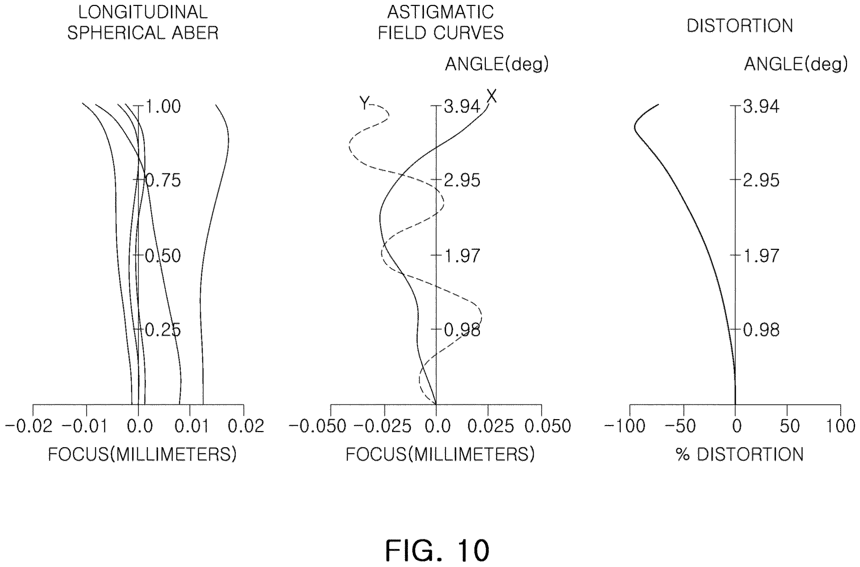

FIG. 10 illustrates an aberration curve of an imaging lens system according to the present embodiment. Tables 9 and 10 illustrate lens characteristics and aspherical values of an imaging lens system according to the present embodiment.

Table 9

| Surface No. | Component | Curvature Radius | Thickness/ Distance | Refractive Index | Abbe No. |
|---|---|---|---|---|---|
| S1 | 1st Lens | 30.2200 | 1.5400 | 1.773 | 49.6 |
| S2 | | 6.8800 | 4.3800 | | |
| S3 | 2nd Lens | -10.8800 | 1.3400 | 1.537 | 56 |
| S4 | | 5.4400 | 2.9500 | | |
| S5 | 3rd Lens | 259.8500 | 6.2700 | 1.614 | 26 |
| S6 | | -8.0100 | 2.4900 | | |
| S7 | Stop | infinity | 0.7600 | | |
| S8 | 4th Lens | 12.8800 | 3.7900 | 1.729 | 53.9 |
| S9 | | -8.0400 | 0.4400 | | |
| S10 | 5th Lens | -13.0400 | 0.9900 | 1.656 | 21.2 |
| S11 | | 4.7300 | 0.0100 | | |
| S12 | 6th Lens | 4.7300 | 4.3000 | 1.537 | 56 |
| S13 | | -4.5500 | 2.8600 | | |

Table 10

| Surface No. | S3 | S4 | S5 | S6 | S10 | S13 |
|---|---|---|---|---|---|---|
| K | 1.610E+00 | 2.550E-01 | - 9.900E+01 | -8.770E-02 | - 2.300E+01 | -1.910E-01 |
| A | 7.280E-03 | 6.480E-03 | -7.120E-05 | -2.230E-06 | -3.070E-03 | 2.220E-03 |
| B | -5.820E-04 | 3.860E-04 | 1.280E-05 | 9.610E-05 | -2.060E-04 | -3.420E-04 |
| C | 3.520E-05 | -1.790E-04 | -2.050E-06 | -2.800E-05 | 1.250E-04 | 7.390E-05 |
| D | -1.370E-06 | 2.370E-05 | 6.740E-07 | 3.330E-06 | -2.820E-05 | -8.290E-06 |
| E | 3.290E-08 | -1.190E-06 | -7.510E-08 | -2.080E-07 | 3.720E-06 | 5.390E-07 |

(continued)

| Surface No. | S3 | S4 | S5 | S6 | S10 | S13 |
|---|---|---|---|---|---|---|
| F | -4.420E-10 | 9.540E-09 | 2.270E-09 | 6.560E-09 | -2.660E-07 | -1.790E-08 |
| G | 2.600E-12 | 4.910E-10 | -2.080E-11 | -7.990E-11 | 7.820E-09 | 2.250E-10 |

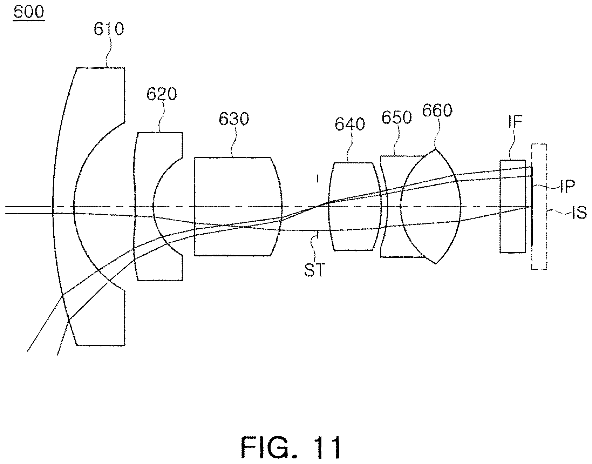

An imaging lens system according to a sixth embodiment will be described with reference to FIG. 11.

An imaging lens system 600 may include a first lens 610, a second lens 620, a third lens 630, a fourth lens 640, a fifth lens 650, and a sixth lens 660.

The first lens 610 may have negative refractive power, a convex object-side surface, and a concave image-side surface. The second lens 620 may have negative refractive power, a concave object-side surface, and a concave image-side surface. The third lens 630 may have positive refractive power, a convex object-side surface, and a convex image-side surface. The fourth lens 640 may have positive refractive power, a convex object-side surface, and a convex image-side surface. The fifth lens 650 may have negative refractive power, a concave object-side surface, and a concave image-side surface. The sixth lens 660 may have positive refractive power, a convex object-side surface, and a convex image-side surface.

The imaging lens system 600 may further include a stop ST, a filter IF, and an imaging plane IP. The stop ST may be disposed between the third lens 630 and the fourth lens 640. The imaging plane IP may be formed on an image sensor IS, and the filter IF may be disposed between the sixth lens 660 and the imaging plane IP.

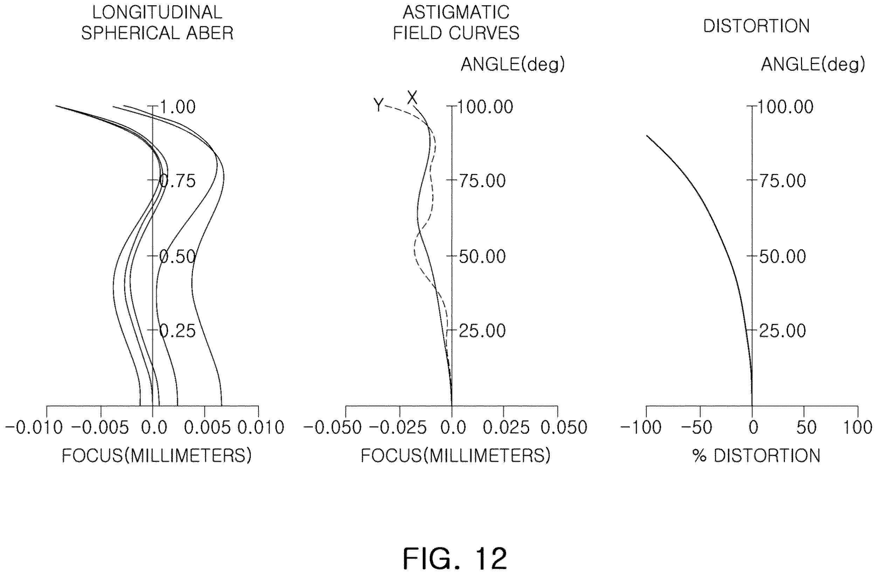

FIG. 12 illustrates an aberration curve of an imaging lens system according to the present embodiment. Tables 11 and 12 illustrate lens characteristics and aspherical values of an imaging lens system according to the present embodiment.

Table 11

| Surface No. | Component | Curvature Radius | Thickness/ Distance | Refractive Index | Abbe No. |
|---|---|---|---|---|---|
| S1 | 1st Lens | 13.7400 | 0.7000 | 1.773 | 49.6 |
| S2 | | 3.1300 | 1.9900 | | |
| S3 | 2nd Lens | -4.8800 | 0.5980 | 1.537 | 56 |
| S4 | | 2.5000 | 1.3430 | | |
| S5 | 3rd Lens | 379.8000 | 2.8500 | 1.614 | 26 |
| S6 | | -3.5900 | 1.1590 | | |
| S7 | Stop | infinity | 0.3390 | | |
| S8 | 4th Lens | 5.7400 | 1.7280 | 1.729 | 53.9 |
| S9 | | -3.6800 | 0.2000 | | |
| S10 | 5th Lens | -5.6900 | 0.4500 | 1.656 | 21.2 |
| S11 | | 2.1500 | 0.0020 | | |
| S12 | 6th Lens | 2.1500 | 1.9360 | 1.537 | 56 |
| S13 | | -2.0600 | 1.3050 | | |

Table 12

| Surface No. | S3 | S4 | S5 | S6 | S10 |
|---|---|---|---|---|---|
| K | 1.610E+0 0 | 2.550E-01 | - 9.900E+01 | -8.760E-02 | - 2.300E+01 |
| A | 7.700E-02 | 6.960E-02 | -2.580E-03 | -1.050E-04 | -3.400E-02 |
| B | -2.920E-02 | 1.550E-02 | 1.750E-03 | 4.230E-03 | -1.110E-02 |
| C | 8.480E-03 | -3.990E-02 | -1.540E-03 | -5.840E-03 | 3.240E-02 |
| D | -1.600E-03 | 2.720E-02 | 1.190E-03 | 3.240E-03 | -3.480E-02 |
| E | 1.870E-04 | -7.700E-03 | -5.020E-04 | -9.460E-04 | 2.180E-02 |

(continued)

| Surface No. | S3 | S4 | S5 | S6 | S10 |
|---|---|---|---|---|---|
| F | -1.230E-05 | 7.550E-04 | 6.960E-05 | 1.400E-04 | -7.400E-03 |
| G | 3.570E-07 | -2.660E-06 | -3.030E-06 | -8.070E-06 | 1.030E-03 |

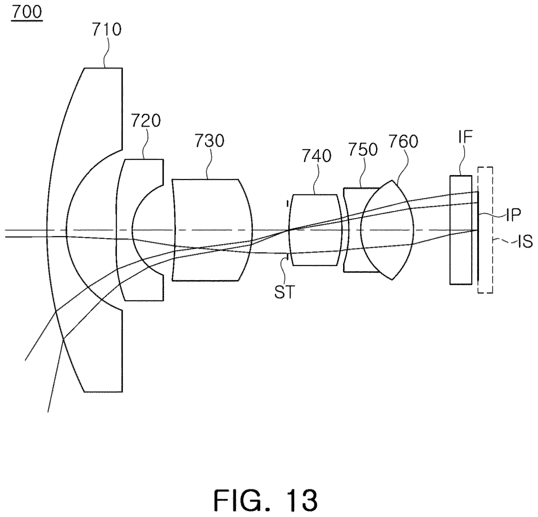

An imaging lens system according to a seventh embodiment will be described with reference to FIG. 13.

An imaging lens system 700 may include a first lens 710, a second lens 720, a third lens 730, a fourth lens 740, a fifth lens 750, and a sixth lens 760.

The first lens 710 may have negative refractive power, a convex object-side surface, and a concave image-side surface. The second lens 720 may have negative refractive power, a concave object-side surface, and a concave image-side surface. The third lens 730 may have positive refractive power, a convex object-side surface, and a convex image-side surface. The fourth lens 740 may have positive refractive power, a convex object-side surface, and a convex image-side surface. The fifth lens 750 may have negative refractive power, a concave object-side surface, and a concave image-side surface. The sixth lens 760 may have positive refractive power, a convex object-side surface, and a convex image-side surface.

The imaging lens system 700 may further include a stop ST, a filter IF, and an imaging plane IP. The stop ST may be disposed between the third lens 730 and the fourth lens 740. The imaging plane IP may be formed on an image sensor IS, and the filter IF may be disposed between the sixth lens 760 and the imaging plane IP.

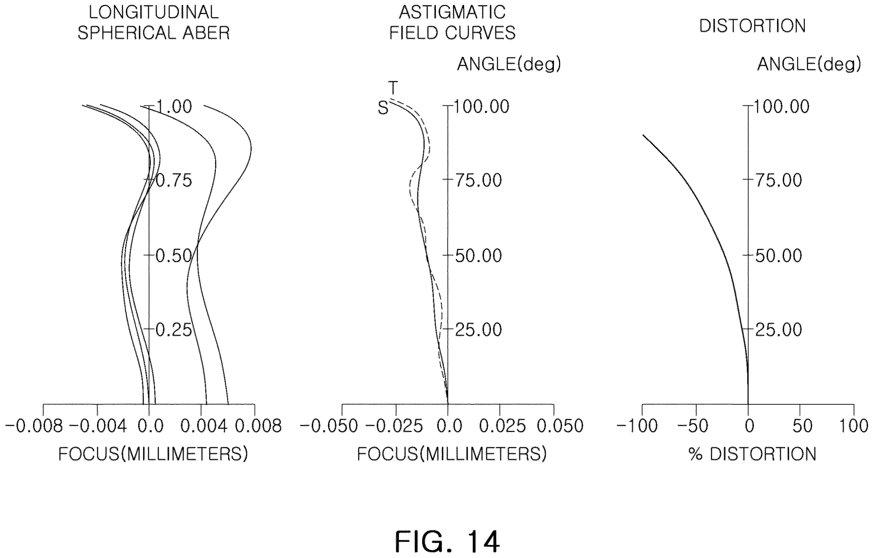

FIG. 14 illustrates an aberration curve of an imaging lens system according to the present embodiment. Tables 13 and 14 illustrate lens characteristics and aspherical values of an imaging lens system according to the present embodiment.

Table 13

| Surface No. | Compone nt | Curvature Radius | Thickness/ Distance | Refractive Index | Abbe No. |
|---|---|---|---|---|---|
| S1 | 1st Lens | 13.7400 | 0.7000 | 1.773 | 49.6 |
| S2 | | 3.1300 | 1.7970 | | |
| S3 | 2nd Lens | -21.6700 | 0.5650 | 1.537 | 56 |
| S4 | | 1.7900 | 1.5400 | | |
| S5 | 3rd Lens | -30.9000 | 2.8500 | 1.614 | 26 |
| S6 | | -3.5000 | 1.2540 | | |
| S7 | Stop | infinity | 0.0280 | | |
| S8 | 4th Lens | 5.4100 | 1.9780 | 1.729 | 53.9 |
| S9 | | -3.9100 | 0.2000 | | |
| S10 | 5th Lens | -5.8200 | 0.4500 | 1.656 | 21.2 |
| S11 | | 1.9900 | 0.0000 | | |
| S12 | 6th Lens | 1.9900 | 1.9380 | 1.537 | 56 |
| S13 | | -2.0200 | 1.3000 | | |

Table 14

| Surface No. | S3 | S4 | S5 | S6 | S10 | S13 |
|---|---|---|---|---|---|---|
| K | 5.760E+01 | -3.950E-01 | 9.500E+01 | 5.460E-03 | - 3.430E+01 | -1.550E-01 |
| A | 4.120E-02 | 3.680E-02 | -2.860E-03 | -4.250E-04 | -4.290E-02 | 2.030E-02 |
| B | -2.020E-02 | 1.730E-02 | -6.030E-03 | 2.150E-03 | 8.280E-03 | -1.600E-03 |
| C | 7.190E-03 | -5.980E-02 | 6.770E-03 | -2.140E-03 | -6.230E-03 | -3.670E-03 |
| D | -1.550E-03 | 6.010E-02 | -2.820E-03 | 7.810E-04 | 1.630E-02 | 6.600E-03 |
| E | 2.010E-04 | -2.940E-02 | 2.670E-04 | -1.880E-04 | -1.790E-02 | -3.880E-03 |

(continued)

| Surface No. | S3 | S4 | S5 | S6 | S10 | S13 |
|---|---|---|---|---|---|---|
| F | -1.460E-05 | 7.670E-03 | 1.530E-04 | 3.540E-05 | 8.780E-03 | 1.070E-03 |
| G | 4.560E-07 | -8.530E-04 | -4.240E-05 | -3.010E-06 | -1.650E-03 | -1.150E-04 |

Tables 15 to 17 illustrate optical characteristic values and conditional expression values of an imaging lens system according to the first to seventh embodiments.

Table 15

| | 1st Embodiment | 2nd Embodiment | 3rd Embodiment | 4th Embodiment | 5th Embodiment | 6th Embodiment | 7th Embodiment |
|---|---|---|---|---|---|---|---|
| f1 | -5.3990 | -5.3563 | -5.0409 | -5.3231 | -11.8653 | -5.3990 | -5.3990 |
| f2 | -2.9808 | -3.4146 | -3.2646 | -3.3547 | -6.5652 | -2.9937 | -3.0533 |
| f3 | 5.8028 | 5.7482 | 5.7896 | 5.6709 | 12.7692 | 5.8086 | 6.1838 |
| f4 | 3.3405 | 3.1711 | 3.0933 | 3.1087 | 7.3518 | 3.3338 | 3.4193 |
| f5 | -2.3534 | -2.0320 | -2.1479 | -1.9743 | -5.1769 | -2.3258 | -2.2101 |
| f6 | 2.3436 | 2.2294 | 2.2717 | 2.1382 | 5.1529 | 2.3341 | 2.2460 |
| TTL | 14.5980 | 14.5010 | 14.6010 | 14.4340 | 32.1200 | 14.6000 | 14.6000 |
| f | 0.9240 | 0.9260 | 0.9280 | 0.9280 | 2.0330 | 0.9200 | 0.9230 |
| f number | 2.0000 | 2.0000 | 2.0000 | 2.0000 | 2.0000 | 2.0000 | 2.0000 |
| ImgHT | 1.8000 | 1.8000 | 1.8000 | 1.8000 | 4.0000 | 1.8000 | 1.8000 |

Table 16

| Conditional Expression | 1st Embodiment | 2nd Embodiment | 3rd Embodiment | 4th Embodiment | 5th Embodiment | 6th Embodiment | 7th Embodiment |
|---|---|---|---|---|---|---|---|
| f/f4 | 0.2766 | 0.2920 | 0.3000 | 0.2985 | 0.2765 | 0.2760 | 0.2699 |
| f1/f2 | 1.8112 | 1.5686 | 1.5441 | 1.5867 | 1.8073 | 1.8035 | 1.7682 |
| f1/f3 | -0.9304 | -0.9318 | -0.8707 | -0.9387 | -0.9292 | -0.9295 | -0.8731 |
| f1/f4 | -1.6162 | -1.6891 | -1.6296 | -1.7123 | -1.6139 | -1.6195 | -1.5790 |
| f1/f5 | 2.2941 | 2.6359 | 2.3469 | 2.6962 | 2.2920 | 2.3214 | 2.4428 |
| f1/f6 | -2.3037 | -2.4026 | -2.2190 | -2.4895 | -2.3027 | -2.3131 | -2.4038 |
| f2/f4 | -0.8923 | -1.0768 | -1.0554 | -1.0792 | -0.8930 | -0.8980 | -0.8930 |
| f3/f4 | 1.7371 | 1.8127 | 1.8717 | 1.8242 | 1.7369 | 1.7423 | 1.8085 |
| f5/f6 | -1.0042 | -0.9115 | -0.9455 | -0.9233 | -1.0047 | -0.9964 | -0.9840 |
| (f1+f2+f3)/(f4+f5+f6) | -0.7737 | -0.8973 | -0.7821 | -0.9188 | -0.7726 | -0.7732 | -0.6565 |

Table 17

| Conditional Expression | 1st Embodiment | 2nd Embodiment | 3rd Embodiment | 4th Embodiment | 5th Embodiment | 6th Embodiment | 7th Embodiment |
|---|---|---|---|---|---|---|---|
| R1/R2 | 4.3898 | 4.3381 | 4.5889 | 4.3431 | 4.3924 | 4.3898 | 4.3898 |
| (R1+R3)/(R2+R4) | 1.5714 | 1.3632 | 1.1198 | 1.3890 | 1.5698 | 1.5737 | -1.6118 |

(continued)

| Conditional Expression | 1st Embodiment | 2nd Embodiment | 3rd Embodiment | 4th Embodiment | 5th Embodiment | 6th Embodiment | 7th Embodiment |
|---|---|---|---|---|---|---|---|
| (R7+R10)/ (R8+R9) | -0.8361 | -0.6881 | -0.7378 | -0.9646 | -0.8354 | -0.8420 | -0.7605 |
| R10/R11 | 1.0000 | 0.7046 | 0.8252 | 0.7822 | 1.0000 | 1.0000 | 1.0000 |
| R10/R12 | -1.0386 | -0.9143 | -0.8819 | -1.0233 | -1.0396 | -1.0437 | -0.9851 |
| (R10+R11)/ R12 | -2.0773 | -2.2119 | -1.9506 | -2.3314 | -2.0791 | -2.0874 | -1.9703 |
| (R10-R12)/ R11 | 1.9628 | 1.4752 | 1.7610 | 1.5467 | 1.9619 | 1.9581 | 2.0151 |
| (R1+R12)/R11 | 5.4279 | 5.1896 | 5.3398 | 5.1422 | 5.4271 | 5.4326 | 5.8894 |

The present disclosure can provide an imaging lens system that may achieve high resolution while implementing constant optical characteristics (focal length) in a wide temperature range.

One or more embodiments of the present disclosure may provide an imaging lens system capable of achieving high resolution while minimizing a focus change magnitude due to rapid temperature deviations by using both plastic and glass lenses.

While specific examples have been shown and described above, it will be apparent after an understanding of this disclosure that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. An imaging lens system comprising:

   a first lens, a second lens, a third lens, a fourth lens, a fifth lens, and a sixth lens, sequentially arranged from an object side,
   wherein the imaging lens system satisfies the following conditional expressions:

   $$-2.6 < f1/f6 < -2.0, \text{ and}$$

   and

   $$0.26 \leq f/f4 \leq 0.32,$$

   where f is a focal length of the imaging lens system, f1 is a focal length of the first lens, f4 is a focal length of the fourth lens, and f6 is a focal length of the sixth lens.

2. The imaging lens system of claim 1, wherein the first lens has a convex object-side surface.

3. The imaging lens system of claim 1, wherein the second lens has a concave object-side surface.

4. The imaging lens system of claim 1, wherein the third lens has a convex object-side surface.

**5.** The imaging lens system of claim 1, wherein the fourth lens has a convex object-side surface.

**6.** The imaging lens system of claim 1, wherein the fifth lens has a concave object-side surface.

**7.** The imaging lens system of claim 1, wherein the sixth lens has a convex object-side surface.

**8.** An imaging lens system comprising:

a first lens, a second lens, a third lens, a fourth lens, a fifth lens, and a sixth lens, sequentially arranged from an object side,
wherein the imaging lens system satisfies the following conditional expressions:

$$1.2 < f1/f2 < 2.0,$$

$$1.6 < f3/f4 < 2.0, \text{ and}$$

and

$$f \text{ number} < 2.0,$$

where f1 is a focal length of the first lens, f2 is a focal length of the second lens, f3 is a focal length of the third lens, and f4 is a focal length of the fourth lens.

**9.** The imaging lens system of claim 8, wherein the first lens has a convex object-side surface.

**10.** The imaging lens system of claim 8, wherein the second lens has a concave object-side surface.

**11.** The imaging lens system of claim 8, wherein the third lens has a convex object-side surface.

**12.** The imaging lens system of claim 8, wherein the fourth lens has a convex object-side surface.

**13.** The imaging lens system of claim 8, wherein the fifth lens has a concave object-side surface.

**14.** The imaging lens system of claim 8, wherein the sixth lens has a convex object-side surface.

**15.** The imaging lens system of claim 8, further comprising a stop disposed between the third lens and the fourth lens.

FIG. 1

LONGITUDINAL
SPHERICAL ABER

ASTIGMATIC
FIELD CURVES

DISTORTION

FIG. 2

EP 4 546 025 A2

FIG. 3

LONGITUDINAL
SPHERICAL ABER

ASTIGMATIC
FIELD CURVES

DISTORTION

ANGLE(deg)

ANGLE(deg)

-0.02 -0.01 0.0 0.01 0.02

FOCUS(MILLIMETERS)

-0.050 -0.025 0.0 0.025 0.050

FOCUS(MILLIMETERS)

-100 -50 0 50 100

% DISTORTION

FIG. 4

EP 4 546 025 A2

FIG. 5

FIG. 6

FIG. 7

LONGITUDINAL
SPHERICAL ABER

ASTIGMATIC
FIELD CURVES

DISTORTION

FIG. 8

EP 4 546 025 A2

FIG. 9

FIG. 10

FIG. 11

LONGITUDINAL
SPHERICAL ABER

ASTIGMATIC
FIELD CURVES

DISTORTION

FIG. 12

700
710
720
730
740 750 760
IF

ST

IP
IS

# FIG. 13

LONGITUDINAL
SPHERICAL ABER

ASTIGMATIC
FIELD CURVES

DISTORTION

ANGLE(deg)

ANGLE(deg)

T
S

FOCUS(MILLIMETERS)

FOCUS(MILLIMETERS)

% DISTORTION

FIG. 14

EP 4 546 025 A2

**EP 4 546 025 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230141899